(19) Europäisches Patentamt
European Patent Office
Office européen des brevets

(11) EP 1 510 017 B1

(12) **EUROPEAN PATENT SPECIFICATION**

(45) Date of publication and mention of the grant of the patent:
**28.03.2012 Bulletin 2012/13**

(21) Application number: **03730966.3**

(22) Date of filing: **27.05.2003**

(51) Int Cl.:
***H04W 76/00*** *(2009.01)* ***H04L 1/18*** *(2006.01)*

(86) International application number:
**PCT/SE2003/000866**

(87) International publication number:
**WO 2003/105368 (18.12.2003 Gazette 2003/51)**

(54) **SYNCHRONIZING METHOD AND APPARATUS USING ERROR DETECTION OF SEQUENCE NUMBERS TO AVOID SYNCHRONIZING FAILURE**

SYNCHRONISIERUNGSVERFAHREN UND VORRICHTUNG MIT FEHLERDETEKTION VON SEQUENZNUMMERN ZUR VERMEIDUNG EINES SYNCHRONISIERUNGS-MISSERFOLGS

PROCEDE ET APPAREIL DE SYNCHRONISATION UTILISANT L'ERREUR DE DETECTION DE NUMEROS DE SEQUENCE DE FA ON A EVITER UNE DEFAILLANCE DE SYNCHRONISATION

(84) Designated Contracting States:
**AT BE BG CH CY CZ DE DK EE ES FI FR GB GR HU IE IT LI LU MC NL PT RO SE SI SK TR**

(30) Priority: **05.06.2002 SE 0201758**

(43) Date of publication of application:
**02.03.2005 Bulletin 2005/09**

(73) Proprietor: **Telefonaktiebolaget LM Ericsson (publ)**
**164 83 Stockholm (SE)**

(72) Inventor: **TORSNER, Johan**
**FIN-02600 Espoo (FI)**

(74) Representative: **Kühn, Friedrich Heinrich**
**Ericsson AB**
**Patent Unit 3G**
**164 80 Stockholm (SE)**

(56) References cited:
**EP-A2- 1 276 293** **WO-A1-01/56249**
**US-A1- 2003 007 490**

- **SA DA COSTA C. ET AL.: 'Sequence number synchronization in the ATM adaption layer' PROCEEDINGS OF THE MEDITERRANEAN ELECTROTECHNICAL CONFERENCE vol. 1, 22 May 1991 - 24 May 1991, pages 505 - 508, XP010039946**
- **PATENT ABSTRACTS OF JAPAN vol. 2000, no. 09 13 October 2000 & JP 2000 183860 A (FUJITSU LTD.) 30 June 2000**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD OF THE INVENTION

The present invention relates to transmissions and retransmissions of packet data in a communications system. Especially, it relates to radio link transmissions and avoidance of deciphering failures in a cellular mobile radio system, particularly a Universal Mobile Telecommunications System, UMTS, or WCDMA system.

### BACKGROUND AND DESCRIPTION OF RELATED ART

In many radio communications system, such as UMTS, ciphering or encryption protects user data and signaling confidentiality. For detection of transmission errors data is also protected by an error detecting code. For this purpose a cyclic redundancy check code or CRC-code is used.

Within this patent application, a radio network controller, RNC, is understood as a network element including an RRM (Radio Resource Management) entity. The RNC is connected to a fixed network. Node B is a logical node responsible for radio transmission/reception in one or more cells to/from a User Equipment. A base station, BS, is a physical entity representing Node B.

With reference to figure 1, base stations «BS 1» and «BS 2» are physical entities representing Nodes B «Node B 1» and «Node B 2» respectively. «Node B 1» and «Node B 2» terminate the air interface, called Uu interface within UMTS, between UE and respective Node B towards the radio network controller «RNC». «RNC» is connected to a fixed network «Network».

In figure 1, the base stations are connected to the same radio network controller RNC. However, this specification also covers the exemplary situation where the base stations are connected to different RNCs. In UMTS, the RLC protocol is terminated in a serving RNC, SRNC, responsible for interconnecting the radio access network of UMTS to a core network.

3rd Generation Partnership Project (3GPP): Technical Specification Group Radio Access Network, Radio Interface Protocol Architecture, 3GPP TS 25.301 v3.6.0, France, September 2000, describes an overall protocol structure of a Universal Mobile Telecommunications System (UMTS). There are three protocol layers:

- physical layer, layer 1 or L1,
- data link layer, layer 2 or L2, and
- network layer, layer 3 or L3.

Layer 2, L2, and layer 3, L3 are divided into Control and User Planes. Layer 2 consists of two sub-layers, RLC and MAC, for the Control Plane and four sub-layers, BMC, PDCP, RLC and MAC, for the User Plane. The acronyms BMC, PDCP, RLC and MAC denote Broadcast/Multicast Control, Packet Data Convergence Protocol, Radio Link Control and Medium Access Control respectively.

Figure 2 displays a simplified UMTS layers 1 and 2 protocol structure for a Uu Stratum, UuS, or Radio Stratum, between a user equipment UE and a Universal Terrestrial Radio Access Network, UTRAN.

Radio Access Bearers, RABs, are associated with the application for transportation of services between core network, CN, and user equipment, UE, through a radio access network. Each RAB is associated with quality attributes such as service class, guaranteed bit rate, transfer delay, residual BER, and traffic handling priority. An RAB may be assigned one or more Radio Bearers, RBs, being responsible for the transportation between UTRAN and UE. For each mobile station there may be one or several RBs representing a radio link comprising one or more channels between UE and UTRAN. Data flows (in the form of segments) of the RBs are passed to respective Radio Link Control, RLC, entities which amongst other tasks buffer the received data segments. There is one RLC entity for each RB. In the RLC layer, RBs are mapped onto respective logical channels. A Medium Access Control, MAC, entity receives data transmitted in the logical channels and further maps logical channels onto a set of transport channels. In accordance with subsection 5.3.1.2 of the 3GPP technical specification MAC should support service multiplexing e.g. for RLC services to be mapped on the same transport channel. In this case identification of multiplexing is contained in the MAC protocol control information.

Transport channels are finally mapped to a single physical channel which has a total bandwidth allocated to it by the network. In frequency division duplex mode, a physical channel is defined by code, frequency and, in the uplink, relative phase (I/Q). In time division duplex mode a physical channel is defined by code, frequency, and timeslot. As further described in subsection 5.2.2 of the 3GPP technical specification the L1 layer is responsible for error detection on transport channels and indication to higher layer, FEC encoding/decoding and interleaving/deinterleaving of transport channels.

Segmentation and reassembly of data units are performed between different protocol layers as schematically illustrated in figure 3.

A MAC protocol data unit, MAC PDU, also called transport block, TB, is the basic unit passed down to L1 from MAC layer.

A number of MAC PDUs shown in figure 3 shall comprise a transport block set. Note, however, that in all cases a transport block set need not necessarily match with an RLC SDU. The span of a transport block set can be smaller or larger than an RLC SDU.

Transport blocks, TBs, passed to L1 from MAC at the same time instance and using the same transport channel form a transport block set.

A higher layer PDU can be reassembled by simply concatenating all RLC PDUs included in a transport block set as implied by the used transport format.

A transmission time interval, TTI, is defined as the inter-arrival time of Transport Block Sets, i.e. the time it should take to transmit a transport block set.

A transport format is defined as a format offered by L1 to MAC for the delivery of a Transport Block Set during a Transmission Time Interval on a Transport Channel, and is a combination of encodings, interleaving, bit rate and mapping onto physical channels.

3rd Generation Partnership Project (3GPP) : Technical Specification Group Radio Access Network, Multiplexing and channel coding (FDD), 3GPP TS 25.212 v4.4.0, France, March 2002, describes different generator polynomials of CRC-codes used in UMTS. The respective generator polynomials are

$$g_{24}(x) = 1+x+x^5+x^6+x^{23}+x^{24} ,$$

$$g_{16}(x) = 1+x^5+x^{12}+x^{16} ,$$

$$g_{12}(x) = 1+x+x^2+x^3+x^{11}+x^{12} ,$$

$$g_8(x) = 1+x+x^3+x^4+x^7+x^8 .$$

The respective number of parity bits in the resulting code word equals the exponent of the highest power term of the respective generator polynomial. Which CRC-code to use for each Transport Channel, TrCH, is signaled from protocol layers above L2/MAC layer.

3rd Generation Partnership Project (3GPP): Technical Specification Group Radio Access Network, Radio Link Control (RLC) protocol specification, 3GPP TS 25.322 v4.4.0, France, March 2002, specifies the RLC protocol. The RLC layer provides three services to the higher layers:

- transparent data transfer service,
- unacknowledged data transfer service, and
- acknowledged data transfer service,

in the sequel referred to as transparent mode, TM, unacknowledged mode, UM, and acknowledged mode, AM, respectively.

The 3GPP specification describes in chapter 9 elements for peer-to-peer communication. No RLC overhead is added for transparent mode data protocol data units, TMD-PDUs. Unacknowledged mode data protocol data units, UMD-PDUs, and acknowledged mode protocol data units, AMD-PDUs, are sequentially numbered. The sequence number, SN, parameter comprises 12 bits for AMD-PDUs and 7 bits for UMD-PDUs. SN is a modulo-integer sequence number, where the integer equals 4096 and 128 for AM and UM respectively. A hyper frame number indicator, HFNI, indicates a hyper frame number, HFN, to the peer entity. With the aid of this field HFN of UE and UTRAN, respectively, can be synchronized. Section 9.7.3 of the 3GPP specification describes SDU discard function for acknowledged, unacknowledged, and transparent modes.

3rd Generation Partnership Project (3GPP): Technical Specification Group services and System Aspects, 3G Security, Security Architecture, 3GPP TS 33.102 v4.3.0, France, December 2001, shows 3G security architecture. Four security features are provided with respect to confidentiality of data on a network access link:

- cipher algorithm agreement,
- cipher key agreement,
- confidentiality of user data, and
- confidentiality of signaling data.

Section 6.4.8 of the 3GPP technical specification describes initialization of synchronization for ciphering and integrity protection. HFN and SN are initialized. HFN and SN form a COUNT-C variable, the 32-bit values of which are input to the ciphering algorithm. Section 6.6.4.1 of the 3GPP technical specification reveals the composition of COUNT-C in UMTS. HFN is incremented each SN cycle.

International Patent Application WO0156249 reveals synchronization of encrypted data by means of sequence numbers. The sequence numbers are unencrypted and unencoded. Missing sequence numbers are used to detect lost data packets. A requirement of stream encryption algorithms is that the transmitting side and the receiving side be synchronized.

Another prior art approach is disclosed in SA DA COSTA C. ET AL.: "Sequence number synchronization in the ATM adaption layer" PROCEEDINGS OF THE MEDITERRANEAN ELECTROTECHNICAL CONFERENCE vol. 1, 22 May 1991 - 24 May 1991, pages 505 - 508, XP010039946, which shows an algorithm defining what actions to be taken at the receiving side to keep the synchronization of the sequence number courting of the cells.

None of the cited documents above discloses a method and system for exploring the inherent redundancy of the unencoded sequence numbers SNs, for avoidance of cipher synchronization failure and whereby the redundancy of CRC-encoded data can be reduced. Particularly, none of the cited documents reveals a method and system of HFN update, reducing the risk of erroneous HFN update due to SN containing one or more transmission errors or lost SNs.

## SUMMARY OF THE INVENTION

HFN is normally not transmitted over air, with initialization being one important exception. HFN is updated in both transmitter and receiver each time SN recycles.

When SN is subject to transmission errors or when a data packet carrying an SN is lost there is risk of erroneous updating of HFN. Prior art reveals solution for acknowledged mode making use or error detection of encoded data for ordering retransmission. However, for unacknowledged mode this option is not available. Further, 1 for many applications, particularly real-time applications it is desirable to use low-redundancy error detecting codes or, in some cases, no error detecting code.

Consequently, it is an object of this invention to provide a method and system keeping synchronism in case of lost or erroneous SNs without relaying on a CRC error detecting code.

It is also an object to detect lost or erroneous sequence numbers, SNs.

A further object is to leave HFN unaffected by lost or erroneous SNs.

Finally, it is an object to introduce a mechanism for eliminating the effect of occasional erroneous or lacking SNs.

These objects are met by the invention as defined by the features of the independent claims. The invention is particularly well suited for a universal Mobile Telecommunications System, UMTS, disregarding SNs considered invalid when determining HFNs. Further embodiments are listed in the dependent claims.

Preferred embodiments of the invention, by way of examples, are described with reference to the accompanying drawings below.

## BRIEF DESCRIPTION OF THE DRAWINGS

Figure 1 shows communication between a UE and a base station involved in a connection between an RNC and the UE.

Figure 2 displays a layered protocol structure, according to prior art, in a radio communications system.

Figure 3 schematically illustrates segmentation and reassembly of data units for different protocol layers.

Figure 4 illustrates a basic method of updating HFN at receiver side upon receipt of PDUs.

Figure 5 shows a block diagram illustrating a first embodiment of the invention comparing a prediction estimate and received sequence number.

Figure 6 shows a flow chart illustrating a first embodiment of the invention.

Figure 7 illustrates a second embodiment of the invention, considering PDUs within a sliding decision-window.

Figure 8 shows three cases with exemplary sequences illustrating the second embodiment.

## DESCRIPTION OF PREFERRED EMBODIMENTS

With reference to figure 1, encrypted or ciphered data is transmitted over the radio interface between «UE/Client Device» and «BS 2/Node B 2». In uplink direction «BS 2/Node B 2» represents the receiver side of the radio interface and in downlink direction receiver side is represented by «UE/Client Device» and «BS 2/Node B 2» is on the transmitter side. Encrypted or ciphered data is transmitted from the transmitter side to the receiver side in protocol data units, PDUs.

On the transmitter side it is a trivial matter to increase HFN as a sequence number counter starts a new cycle. However, this is not the case on the receiver side. First, the receiver side should use the same HFN as the transmitter side. Second, during PDU transmissions some PDUs may be lost. The receiver side should nevertheless use correct HFN and update HFN correctly in order not to loose synchronism.

Figure 4 shows a basic method of updating HFN at receiver side upon receipt of PDUs, each PDU including a sequence number, SN. According to the method a new cycle of sequence numbers is assumed to be started when the most recently received sequence number, $SN_i$, is less than the sequence number, $SN_{i-1}$, of the PDU received consecutively preceding the most recently received PDU. Not restricting HFN to increase only at sequence number 0, the basic method updates HFN correctly also if one or more PDUs are lost during transmission.

A basic method, e.g. as described above in relation to figure 4, does not necessarily increase HFN correctly in case of transmission errors. Since transmitter side increases HFN irrespective of whether it is increased at receiving side, this could result in lost synchronism between transmitting and receiving sides.

Figure 5 shows a block diagram and figure 6 shows a flow chart illustrating a first embodiment of the invention where sequence numbers are purged from a, real or fictitious, list according to the condition

$$SN_n > SN_{n-1} + \Delta_{max} \quad (\mathrm{mod}\ I)\ , \quad \text{where} \qquad (1)$$

$$\Delta_{max} = N_{TTI} \cdot TB_{max} + \delta\ , \qquad (2)$$

prior to determining HFN with a basic method, such as the method described in relation to figure 4, at the receiver side. In equation (1) $I=_{4096}$ for acknowledged mode and I=128 for unacknowledged mode when applied to UMTS according to cited 3GPP specification. $SN_n$ is the sequence number with list index $n$ and $SN_{n-1}$ is the sequence number of the PDU received immediately preceding a remaining PDU with sequence number $SN_n$. In figure 6, the modulus operation of equation (1) has not been indicated for reasons of readability. Calculation modulo $I$ in equation (1) relies on the cyclic characteristic of the sequence numbers. When the cycle length of the sequence numbers changes, so does $I$. In equation (2), $N_{TTI}$ is the number of transmission time intervals, TTIs, when no data is received and $TB_{max}$ is the maximum number of transport blocks in the transport format, TF, of the corresponding transport channel. After proper disregarding of one or more erroneous sequence numbers, in figure 6 illustrated by purging the sequence number from a list arranged according to arrival time, the remaining sequence numbers are used as input for basic updating of HFN.

Disregarding an SN as regards deciphering synchronization does not imply that the corresponding PDU necessarily is discarded from RLC. Nor does it imply that the PDU is not discarded. Preferably, according to the invention corresponding PDU is not discarded from RLC.

By adding a term, $\delta$=2, in equation (2) one RLC discard operation or RLC reconfiguration is allowed between two consecutively received PDUs. For each disregarded SN, $\delta$ is increased by 1. When an SN is not disregarded, $\delta$ is reset to 2.

The first embodiment of the invention can, alternatively, be considered as a prediction of the next received sequence number, considering lost PDUs. In figure 5 sequence numbers «SNs» as received are input to a prediction entity «Prediction» and an optional storage element «Buffer» allowing for time alignment of received data with predicted data as need be. The greater the number of lost PDUs, estimated from the number of transmission time intervals with no received PDUs and the maximum number of transport blocks in the transport format, the greater the prediction interval of sequence numbers to come. If the next sequence number is not within the prediction interval it is disregarded. In figure 5 this is performed in entity «Cmp & Purge». The purged sequence of sequence numbers «Purged SNs» is then fed to basic HFN update, e.g. an entity operating according to the updating described in relation to figure 4.

If, e.g., a transmitted sequence of sequence numbers is ... 5, 6, 7, 8, 9, 10, 11, ... and the received sequence is ... 5, 6, 7, 8, 65, 10, 11, ... and there are no TTIs with no data, then initially $\Delta_{max}$ = 2 according to equation (2). As 6-5=1 $\ngtr$ 2, 7-6=1 $\ngtr$ 2 and 8-7=1 $\ngtr$ 2, no purging will occur until 65-8=57 > 2, in the next interval. The sequence number transmitted as 9 and received as 65 will be purged, and thereafter treated like a lost sequence number. Consequently $\Delta_{max}$ is set to 3, as indicated by equation (2). At receipt of sequence number 10, the prediction disregards the received sequence number 65 and the comparison yields 10-8=2 $\ngtr$ 3. Consequently sequence number 10 will remain and be transferred for basic HFN updating. At receipt of sequence number 11, it is again noted that no TTI is lost since reception of sequence number 10, and $\Delta_{max}$ is reset to 2. As 11-10=1 $\ngtr$ 2, sequence number 11 will not be disregarded.

If, for the same transmitted sequence as in the preceding paragraph, a smaller sequence number, e.g. 2, were received in place of transmitted 9, the comparison would yield, with exemplary modulo 128 calculus (*I*=128), 2-8=122 > 2 and the erroneously received sequence number disregarded similarly to the case of an erroneously received sequence number 65 in the paragraph above.

According to a second embodiment, PDUs within a sliding decision-window spanning over at least four consecutively received PDUs are considered, when increasing HFN. In an algorithm of increasing HFN not considering erroneous or lost SNs, such as the algorithm described above, an indicated increase of HFN is disregarded, if the HFN would not be increased also if any one of the sequence numbers of the sliding decision-window were disregarded. This is illustrated in the flowchart of figure 7. PDUs within a decision window comprising *M*+1 PDUs are considered at decision time-interval of PDU *i*, i.e. PDUs with sequence numbers, SNs, in the interval [*i-M,i*] are considered. One SN or PDU is disregarded among the *M*+1 considered PDUs. In figure 7, the SN of the most recently received PDU is disregarded first. However, any scheme for disregarding the SNs or PDUs would apply as well, only it guarantees the possibility of disregarding any one of the SNs of PDUs within the decision window as need be. If HFN should not be increased according to a basic method of updating HFN, with a sequence number of one PDU being disregarded, HFN is left unincreased. The receiver then proceeds with the next SN/PDU, restarting the flow chart at time interval i+1. However, if HFN would be increased if the SN of the most recently received PDU were disregarded and not all PDUs' SNs have been disregarded once, the SN of next PDU within the decision window is disregarded. This repeats until the SNs of all *M*+1 PDUs within the decision window have been disregarded once for the final decision at interval *i* or an HFN update according to the basic method does not increase HFN. If HFN should be increased according to the basic method of updating when each one of the SNs/PDUs within the decision window is disregarded, the HFN is updated. Otherwise it is not.

As for the first embodiment, disregarding an SN/PDU as regards deciphering synchronization does not imply that the corresponding PDU necessarily is discarded from RLC in the second embodiment. Nor does it imply that the PDU is not discarded. Preferably, according to the invention corresponding PDU is not discarded from RLC.

Figure 8 shows three cases with exemplary sequences illustrating the second embodiment. In the first two cases, A and B, an exemplary transmitted sequence of SNs is ... 5, 6, 7, 8, 9, 10, ... in decimal notion. However, in case A the transmitted SN 9 is erroneously received as 2 and in case B it is erroneously received as 65. Assuming that a basic HFN updating at the receiving side increases HFN whenever an SN is smaller than the preceding SN, this would erroneously increase HFN in time interval T1 in case A and in time interval T2 for case B. This would also affect deciphering of a substantial amount of subsequent PDUs due to lost synchronization. According to the second embodiment of the invention, this erroneous updating is eliminated at the cost of omitted decoding of only one PDU by considering all PDUs within the sliding decision-window. In figure 8 a window size equal to 5 is illustrated.

For case A, at time interval T1, the erroneous updating of HFN is circumvented according to the second embodiment of the invention, since if the most recently received PDU with sequence number 2 is disregarded, no updating of HFN would occur in time interval T1. Further, when sliding the decision window one step to the right for making a decision in time interval T2, again disregarding the sequence number 2 of time interval T1, no updating of HFN would occur.

In case B, erroneous updating of HFN in time interval T2 is circumvented. Again, time interval T1 is within the decision window and disregarding the sequence number 65 of the PDU received in time interval T1 would result in HFN not being incremented in time interval T2.

In case C, no transmission error of received PDUs is assumed. However PDUs with sequence numbers 127, 0, 1 and 2 have been lost. Again assuming that HFN is updated when the preceding SN is greater than the current SN, HFN would not be updated in time interval T1, as it would according to a basic method, such as the one illustrated in figure 4, but in time interval T2, since disregarding the sequence number received in time-interval T1 would result in HFN not being increased in accordance with case A.

If, in the second embodiment of the invention, the window size spanned over less than four PDUs, HFN would not be increased correctly. If, e.g., the window size spanned only three PDUs for the exemplary sequence of case C in figure 8, disregarding sequence number 3 at time interval T1 or disregarding sequence number 126 at time interval T2 would leave HFN unchanged, and synchronization would be lost. Preferably the window size spans over exactly four SNs (PDUs).

Preferably, all system elements, such as UEs and RNCs in UMTS, where applicable operate according to the invention. However, the invention can also be used in systems also including some equipment, such as UEs and RNCs, not operating according to the invention.

Some exemplary features and characteristics of the invention are listed below.

1. A method of failure avoidance when synchronizing a transceiver end and a receiver end by means of transmitted sequence numbers, each sequence number not necessarily being further error protected, the method **characterized in** that a received sequence number considered erroneous according to a predetermined criterion is disregarded.

2. The method according to characteristic 1 **characterized in** that the criterion comprises arranging of sequence numbers according to their time of arrival and purging of received sequence numbers not being within a prediction interval as determined from earlier received and non-purged one or more sequence numbers and number of one or more transmission time intervals with no data received between consecutively received sequence numbers.

3. The method according to characteristic 2 **characterized in** that the transmission time intervals are weighted by the maximum number of transmission blocks of the transport format.

4. The method according to characteristic 3 **characterized in** that an integer is added to the weighted number of transmission intervals.

5. The method according to any of characteristics 2-4 **characterized in** that a received sequence number being greater than an estimated greatest sequence number allowed is disregarded.

6. The method according to any of characteristics 2-4 **characterized in** that a received sequence number not being greater than an estimated greatest sequence number allowed is not disregarded.

7. The method according to any of characteristics 1-6 **characterized in** that the purged sequence of sequence numbers is passed to updating of a hyper frame number.

8. The method according to characteristic 7 **characterized in** that the hyper frame number is updated according to a basic method.

9. The method according to characteristic 1 **characterized in** that the criterion comprises arranging of received sequence numbers according to their time of arrival and for each decision interval sequentially disregard each one of the received sequence numbers within a decision window comprising consecutively received sequence numbers.

10. The method according to characteristic 9 **characterized in** that the decision window spans over an integer number of consecutively received sequence numbers starting with the sequence number of the decision interval.

11. The method according to characteristic 9 or 10 **characterized in** that the decision window spans over an integer number of consecutively received sequence numbers starting with the sequence number of the most recently received sequence number.

12. The method according to any of characteristics 9-11 **characterized in** that the decision window spans over at least four consecutively received sequence numbers.

13. The method according to any of characteristics 9-12 **characterized in** that for each disregarded sequence number a candidate hyper frame updating is undertaken.

14. The method according to characteristic 13 **characterized in** that the candidate hyper frame updating is undertaken according to a basic method.

15. The method according to characteristic 13 or 14 **characterized in** that if, for any one disregarded sequence number within the decision window, the candidate hyper frame number updating results in a non-increased hyper frame number, no further sequence number is disregarded and no further candidate HFN updating is undertaken for the decision interval.

16. The method according to any of characteristics 13-15 **characterized in** that if, for any one disregarded sequence number within the decision window, the candidate hyper frame number updating results in a non-increased hyper frame number, the hyper frame number of the decision interval is set equal to the hyper frame number of the preceding decision interval.

17. The method according to any of characteristic 13 or 14 **characterized in** that if, for all each one of the disregarded sequence numbers within the decision window, the candidate hyper frame number updating results in the same hyper frame number, this candidate hyper frame number is decided to be the hyper frame number of the decision interval.

18. The method according to any of characteristic 13 or 14 **characterized in** that if, for all each one of the disregarded sequence numbers within the decision window, the candidate hyper frame number updating results in a hyper frame number increase, the hyper frame number of the decision interval is set equal to the hyper frame number of the preceding decision interval increased by one.

19. The method according to characteristics 8 or 14 **characterized in** that the basic method increases a hyper frame number if, when comparing two received sequence numbers, the most recent of the two sequence numbers is less than the other sequence number.

20. The method according to characteristic 19 **characterized in** that the comparison is made modulo an integer, the integer being equal to the cycle length of transmitted sequence numbers.

21. The method according to any of characteristics 1-20 **characterized in** that it is a method of avoiding cipher synchronization failure.

22. The method according to any of characteristics 1-21 **characterized in** that it allows for reduction of redundancy being added to payload.

23. An element for receiving one or more transmitted sequence numbers synchronizing to a transceiver end by means of the transmitted sequence numbers, each sequence number not necessarily being further error protected, the element **characterized by** processing means for disregarding one or more sequence numbers considered erroneous.

24. The element according to characteristic 23 **characterized in** that the disregarding of one or more sequence numbers reduces or eliminates the risk of synchronization failure.

25. The element according to characteristic 23 or 24 **characterized in** that the processing means disregards sequence numbers in accordance with the method in any of characteristics 1-22.

26. An element for receiving one or more transmitted sequence numbers each sequence number not necessarily being further error protected, the element **characterized by** prediction means for prediction of a most recent sequence number from one or more earlier sequence numbers and comparison means for comparing the predicted sequence number with a received counterpart and for conditionally disregarding the received sequence number being the prediction counterpart.

27. The element according to characteristic 26 **characterized by** the comparison means conditionally disregarding the received sequence number being the prediction counterpart if it exceeds a threshold value.

28. The element according to characteristic 27 **characterized in** that the threshold value is determined including as a parameter number of transmission time intervals with no received data since consecutively formerly received sequence number was received.

29. The element according to characteristic 28 **characterized in** that the number of transmission time intervals are weighted with a factor equal to the maximum number of transmission blocks of a current transport format.

30. The element according to characteristic 29 **characterized by** the comparison means comprising transfer means for transferring the non-disregarded sequence numbers to an entity of basic hyper frame number updating.

31. The element according to characteristic 30 **characterized by** the entity of basic hyper frame number updating updates one or more hyper frame numbers according to the method in characteristic 19 or 20.

32. The element according to any of characteristics 23-31 **characterized in** that the element is included in or is a radio network controller.

33. The element according to any of characteristics 23-31 **characterized in** that the element is included in or is a user equipment.

34. The element according to any of characteristics 23-33 **characterized in** that the element is an element of UMTS or a WCDMA system.

35. A radio communications system **characterized by** means for carrying out the method in any of characteristics 1-22.

36. A radio communications system **characterized by** one or more elements according to any of characteristics 23-34.

A person skilled in the art readily understands that the receiver and transmitter properties of a BS or a UE are general in nature. The use of concepts such as BS, UE or RNC within this patent application is not intended to limit the invention only to devices associated with these acronyms. It concerns all devices operating correspondingly, or being obvious to adapt thereto by a person skilled in the art, in relation to the invention. As an explicit non-exclusive example the invention relates to mobile stations without a subscriber identity module, SIM, as well as user equipment including one or more SIMs. Further, protocols and layers are referred to in close relation with UMTS and Internet terminology. However, this does not exclude applicability of the invention in other systems with other protocols and layers of similar functionality. As a non-exclusive example, the invention applies for radio resource management interfacing of a connection protocol application layer as well as interfacing of a connection protocol transport layer, such as TCP.

The invention is not intended to be limited only to the embodiments described in detail above. Changes and modifications may be made without departing from the invention. It covers all modifications within the scope of the following claims.

## Claims

1. A method of failure avoidance when synchronizing by means of transmitted sequence numbers a transceiver end and a receiver end working according to the third generation partnership project (3GPP) standards, wherein each sequence number not necessarily is further error protected, and a received sequence number considered erroneous according to a predetermined criterion is disregarded, **characterized in that** the criterion comprises arranging of sequence numbers according to their time of arrival and purging of received sequence numbers not being within a prediction interval as determined from earlier received and non-purged one or more sequence numbers and number of one or more transmission time intervals with no data received between consecutively received sequence numbers.

2. The method according to claim 1 **characterized in that** the transmission time intervals are weighted by the maximum number of transmission blocks of the transport format.

3. The method according to claim 2 **characterized in that** an integer is added to the weighted number of transmission intervals.

4. The method according to any of claims 1-3 **characterized in that** a received sequence number being greater than an estimated greatest sequence number allowed is disregarded.

5. The method according to any of claims 1-3 **characterized in that** a received sequence number not being greater than an estimated greatest sequence number allowed is not disregarded.

6. The method according to any of claims 1-5 **characterized in that** the purged sequence of sequence numbers is passed to updating of a hyper frame number.

7. The method according to claim 6 **characterized in that** the hyper frame number is updated according to a basic method.

8. The method according to claim 7 **characterized in that** the basic method increases a hyper frame number if, when comparing two received sequence numbers, the most recent of the two sequence numbers is less than the other sequence number.

9. The method according to claim 8 **characterized in that** the comparison is made modulo an integer, the integer being equal to the cycle length of transmitted sequence numbers.

10. An apparatus of failure avoidance when synchronizing by means of transmitted sequence numbers a transceiver end and a receiver end working according to the third generation partnership project (3GPP) standards, wherein each sequence number not necessarily is further error protected, said apparatus comprising processing means for disregarding a received sequence number considered erroneous according to a predetermined criterion, **characterized in that** according to said predetermined criterion the processing means is arranged to arrange the sequence numbers according to their time of arrival and to purge the received sequence numbers not being within a prediction interval as determined from earlier received and non-purged one or more sequence numbers and number of one or more transmission time intervals with no data received between consecutively received sequence numbers.

11. A radio communications system **characterized in that** it comprises one or more apparatus according to claim 10.

**Patentansprüche**

1. Verfahren zur Fehlervermeidung, wenn eine Senderempfängerseite und eine Empfängerseite, die nach den Standards des Partnerschaftsprojekts der dritten Generation (3GPP) arbeiten, mittels übertragener Folgenummern synchronisiert werden, wobei jede Folgenummer nicht unbedingt weiter fehlergeschützt ist, und eine empfangene Folgenummer, die nach einem vorbestimmten Kriterium als fehlerhaft gilt, ignoriert wird, **dadurch gekennzeichnet, dass** das Kriterium umfasst: Ordnen von Folgenummern nach ihrer Ankunftszeit und Entfernen empfangener Folgenummern, die nicht innerhalb eines Vorhersageintervalls liegen, wie bestimmt anhand einer oder mehrerer früher empfangener und nicht entfernter Folgenummern und einer Anzahl eines oder mehrerer Übertragungszeitintervalle ohne Datenempfang zwischen nacheinander empfangenen Folgenummern.

2. Verfahren nach Anspruch 1, **dadurch gekennzeichnet, dass** die Übertragungszeitintervalle mit der maximalen Anzahl der Übertragungsblöcke des Transportformats gewichtet werden.

3. Verfahren nach Anspruch 2, **dadurch gekennzeichnet, dass** eine ganze Zahl zu der gewichteten Anzahl von Übertragungsintervallen addiert wird.

4. Verfahren nach einem der Ansprüche 1 bis 3, **dadurch gekennzeichnet, dass** eine empfangene Folgenummer, die größer ist als eine geschätzte größte zulässige Folgenummer, ignoriert wird.

5. Verfahren nach einem der Ansprüche 1 bis 3, **dadurch gekennzeichnet, dass** eine empfangene Folgenummer, die nicht größer ist als eine geschätzte größte zulässige Folgenummer, nicht ignoriert wird.

6. Verfahren nach einem der Ansprüche 1 bis 5, **dadurch gekennzeichnet, dass** die entfernte Folge von Folgenummern zur Aktualisierung einer Hyperrahmennummer (Hyper frame number) weitergegeben wird.

7. Verfahren nach Anspruch 6, **dadurch gekennzeichnet, dass** die Hyperrahmennummer gemäß einem grundlegenden Verfahren aktualisiert wird.

8. Verfahren nach Anspruch 7, **dadurch gekennzeichnet, dass** das grundlegende Verfahren eine Hyperrahmennummer erhöht, wenn beim Vergleich von zwei empfangenen Folgenummern die jüngste der beiden Folgenummern kleiner ist als die andere Folgenummer.

9. Verfahren nach Anspruch 8, **dadurch gekennzeichnet, dass** der Vergleich modulorechnerisch eine ganze Zahl ergibt, wobei die ganze Zahl gleich der Zykluslänge der übertragenen Folgenummern ist.

10. Vorrichtung zur Fehlervermeidung, wenn eine Senderempfängerseite und eine Empfängerseite, die nach den Standards des Partnerschaftsprojekts der dritten Generation (3GPP) arbeiten, mittels übertragener Folgenummern synchronisiert werden, wobei jede Folgenummer nicht unbedingt weiter fehlergeschützt ist, wobei die Vorrichtung ein Verarbeitungsmittel zur Ignorierung einer empfangenen Folgenummer umfasst, die nach dem vorbestimmten Kriterium als fehlerhaft gilt, **dadurch gekennzeichnet, dass** nach dem vorgegebenen Kriterium das Verarbeitungsmittel dafür eingerichtet ist, die Folgenummern nach ihrer Ankunftszeit zu ordnen und die empfangenen Folgenummern zu entfernen, die nicht innerhalb eines Vorhersageintervalls liegen, wie bestimmt anhand einer oder mehrerer früher empfangener und nicht entfernter Folgenummern und einer Anzahl eines oder mehrerer Übertragungszeitintervalle ohne Datenempfang zwischen nacheinander empfangenen Folgenummern.

11. Funkkommunikationssystem, **dadurch gekennzeichnet, dass** es eine oder mehrere Vorrichtungen nach Anspruch 10 umfasst.

**Revendications**

1. Procédé destiné à éviter une défaillance lors de la synchronisation, par le biais de numéros de séquence transmis, d'une extrémité émettrice-réceptrice et d'une extrémité réceptrice opérant selon les normes de proj et de partenariat de troisième génération (3GPP), dans lequel chaque numéro de séquence n'est pas nécessairement protégé davantage contre les erreurs, et dans lequel un numéro de séquence reçu considéré comme erroné selon un critère prédéterminé est ignoré, **caractérisé en ce que** le critère comprend l'étape consistant à agencer des numéros de séquence selon leur heure d'arrivée et à purger des numéros de séquence reçus qui ne sont pas dans un intervalle prévisionnel, tel que déterminé à partir d'un ou plusieurs numéros de séquence reçus précédemment et non purgés et d'un nombre d'un ou plusieurs intervalles de temps de transmission sans données reçues entre des numéros de séquence reçus consécutivement.

2. Procédé selon la revendication 1, **caractérisé en ce que** les intervalles de temps de transmission sont pondérés par le nombre maximum de blocs de transmission du format de transport.

3. Procédé selon la revendication 2, **caractérisé en ce qu'**un nombre entier est ajouté au nombre pondéré d'intervalles de transmission.

4. Procédé selon l'une quelconque des revendications 1 à 3, **caractérisé en ce qu'**un numéro de séquence reçu qui est supérieur à un numéro de séquence le plus élevé estimé admis est ignoré.

5. Procédé selon l'une quelconque des revendications 1 à 3, **caractérisé en ce qu'**un numéro de séquence reçu qui n'est pas supérieur à un numéro de séquence le plus élevé estimé admis n'est pas ignoré.

6. Procédé selon l'une quelconque des revendications 1 à 5, **caractérisé en ce que** la séquence purgée de numéros de séquence est transmise en vue de la mise à jour d'un numéro d'hyper-trame.

7. Procédé selon la revendication 6, **caractérisé en ce que** le numéro d'hyper-trame est mis à jour selon un procédé de base.

8. Procédé selon la revendication 7, **caractérisé en ce que** le procédé de base augmente un numéro d'hyper-trame si, lorsque sont comparés deux numéros de séquence reçus, le plus récent des deux numéros de séquence est inférieur à l'autre numéro de séquence.

9. Procédé selon la revendication 8, **caractérisé en ce que** la comparaison est mise en oeuvre par le biais d'une opération modulo d'un nombre entier, le nombre entier étant égal à la durée de cycle de numéros de séquence transmis.

**10.** Dispositif destiné à éviter une défaillance lors de la synchronisation, par le biais de numéros de séquence transmis, d'une extrémité émettrice-réceptrice et d'une extrémité réceptrice opérant selon les normes de projet de partenariat de troisième génération (3GPP), dans lequel chaque numéro de séquence n'est pas nécessairement protégé davantage contre les erreurs, ledit dispositif comprenant un moyen de traitement pour ignorer un numéro de séquence reçu considéré comme erroné selon un critère prédéterminé, **caractérisé en ce que**, selon ledit critère prédéterminé, le moyen de traitement est agencé de manière à agencer les numéros de séquence selon leur heure d'arrivée, et à purger les numéros de séquence reçus qui ne sont pas dans un intervalle prévisionnel, tel que déterminé à partir d'un ou plusieurs numéros de séquence reçus précédemment et non purgés et d'un nombre d'un ou plusieurs intervalles de temps de transmission sans données reçues entre des numéros de séquence reçus consécutivement.

**11.** Système de communication radio **caractérisé en ce qu'**il comprend un ou plusieurs dispositifs selon la revendication 10.

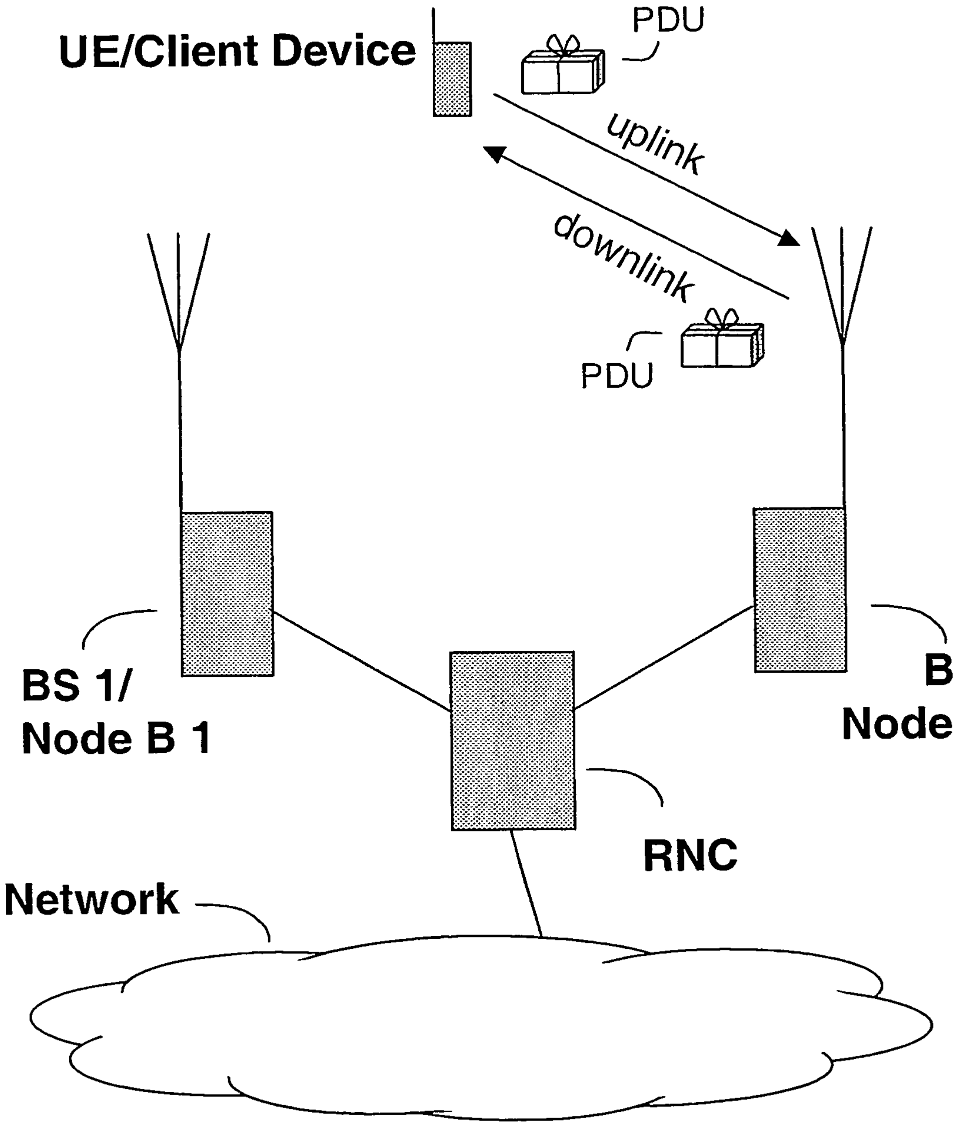
UE/Client Device
PDU
uplink
downlink
PDU
BS 1/
Node B 1
BS 2/
Node B 2
RNC
Network

*Fig. 1*

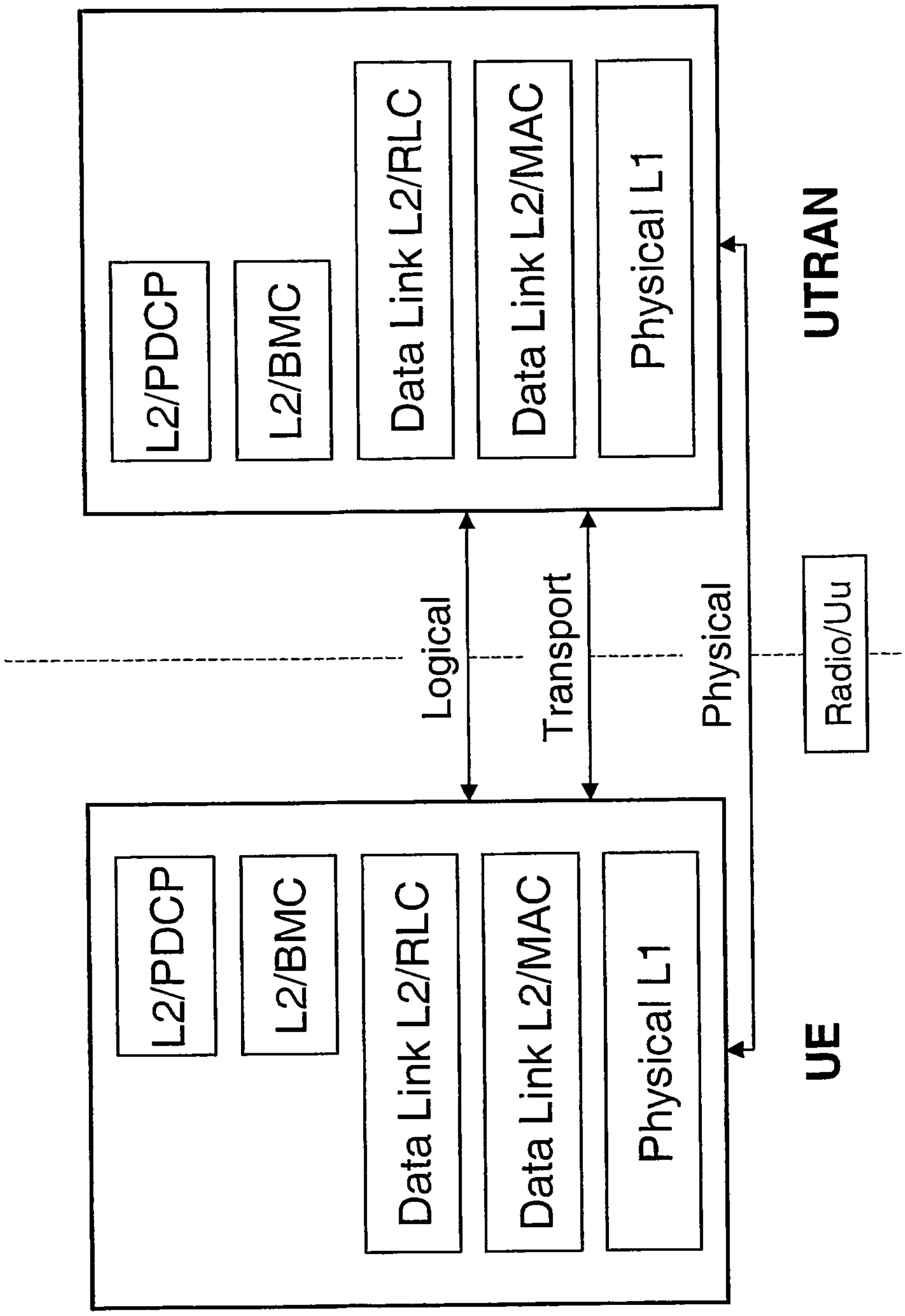
L2/PDCP
L2/BMC
Data Link L2/RLC
Data Link L2/MAC
Physical L1
UE
L2/PDCP
L2/BMC
Data Link L2/RLC
Data Link L2/MAC
Physical L1
UTRAN
Logical
Transport
Physical
Radio/Uu

Fig. 2

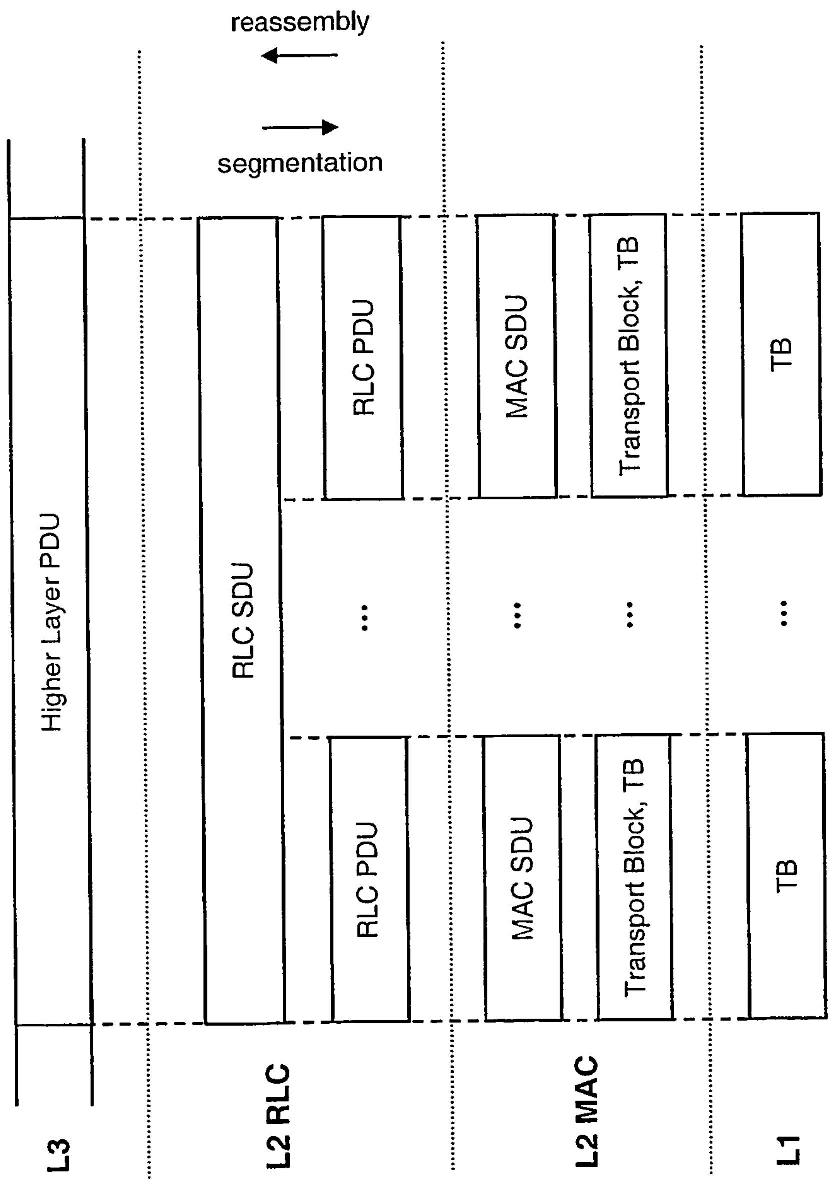
reassembly
segmentation
L3
L2 RLC
L2 MAC
L1
Higher Layer PDU
RLC SDU
RLC PDU
RLC PDU
MAC SDU
MAC SDU
Transport Block, TB
Transport Block, TB
TB
TB
...

Fig. 3

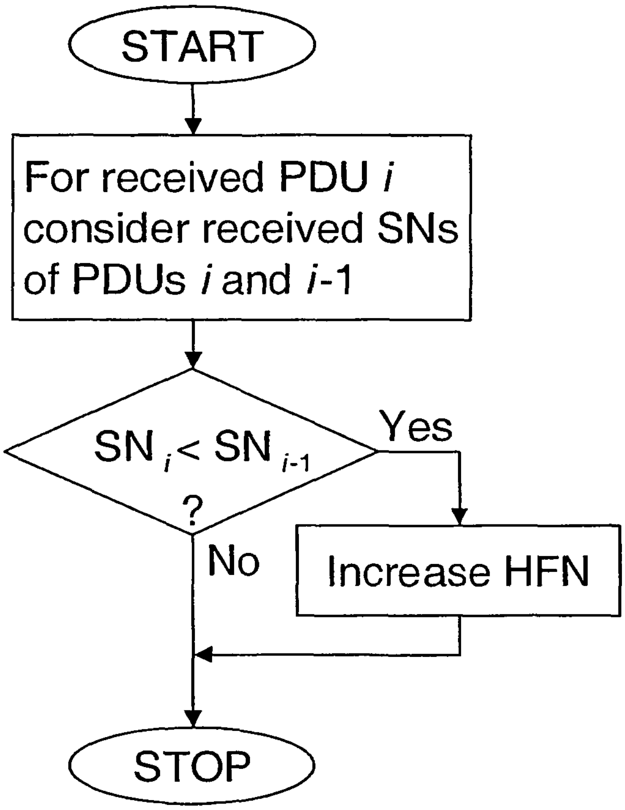
START
For received PDU i consider received SNs of PDUs i and i-1
SN i < SN i-1 ?
Yes
Increase HFN
No
STOP

*Fig. 4*

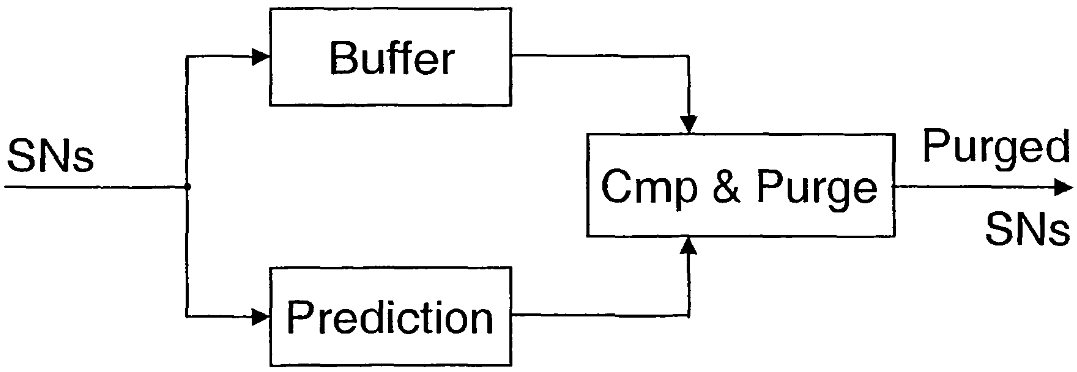
SNs
Buffer
Prediction
Cmp & Purge
Purged SNs

*Fig. 5*

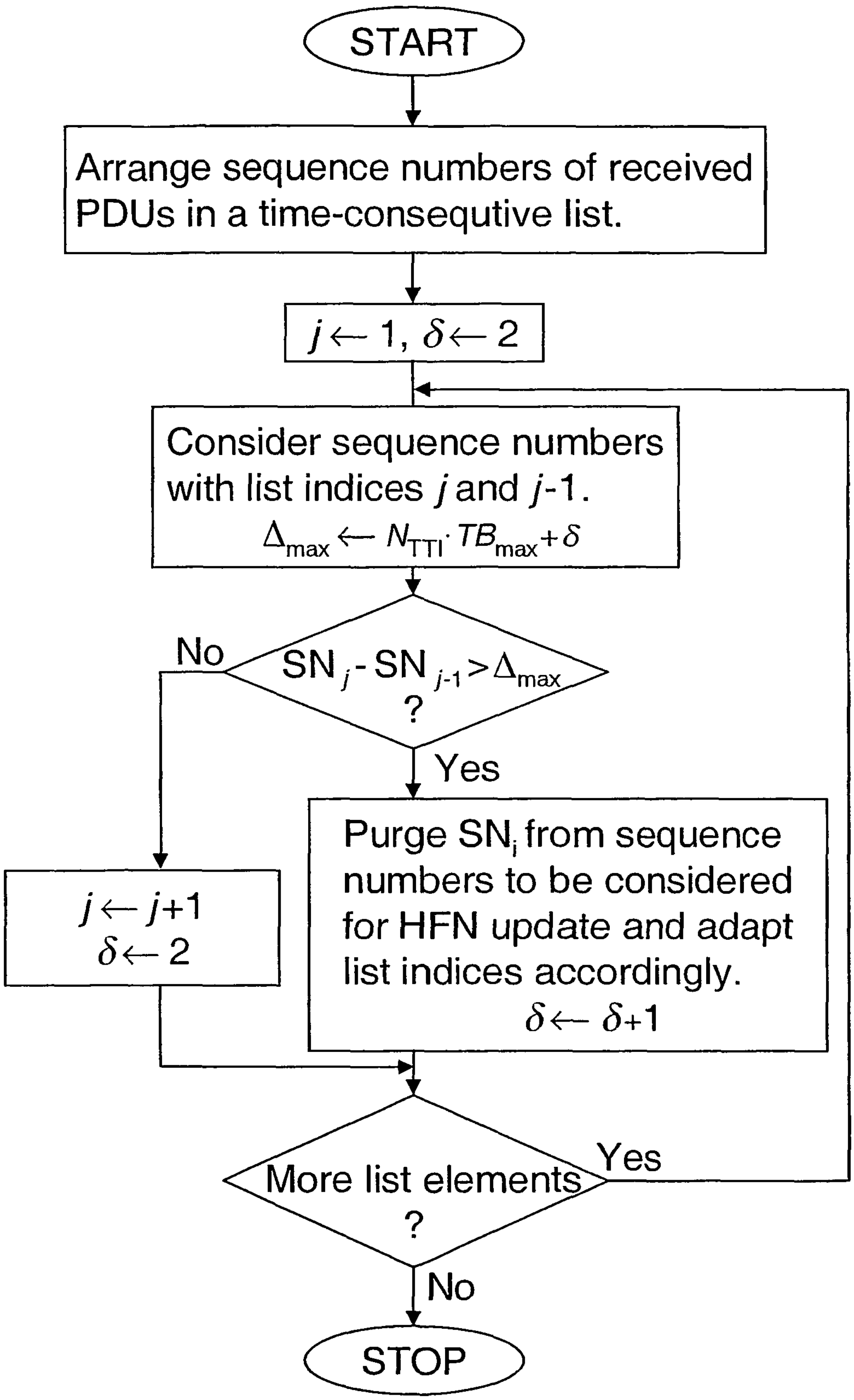
START
Arrange sequence numbers of received PDUs in a time-consequtive list.
j ← 1, δ ← 2
Consider sequence numbers with list indices j and j-1.
Δmax ← NTTI · TBmax + δ
No
SN j - SN j-1 > Δmax ?
Yes
Purge SNj from sequence numbers to be considered for HFN update and adapt list indices accordingly.
δ ← δ+1
j ← j+1
δ ← 2
Yes
More list elements ?
No
STOP

*Fig. 6*

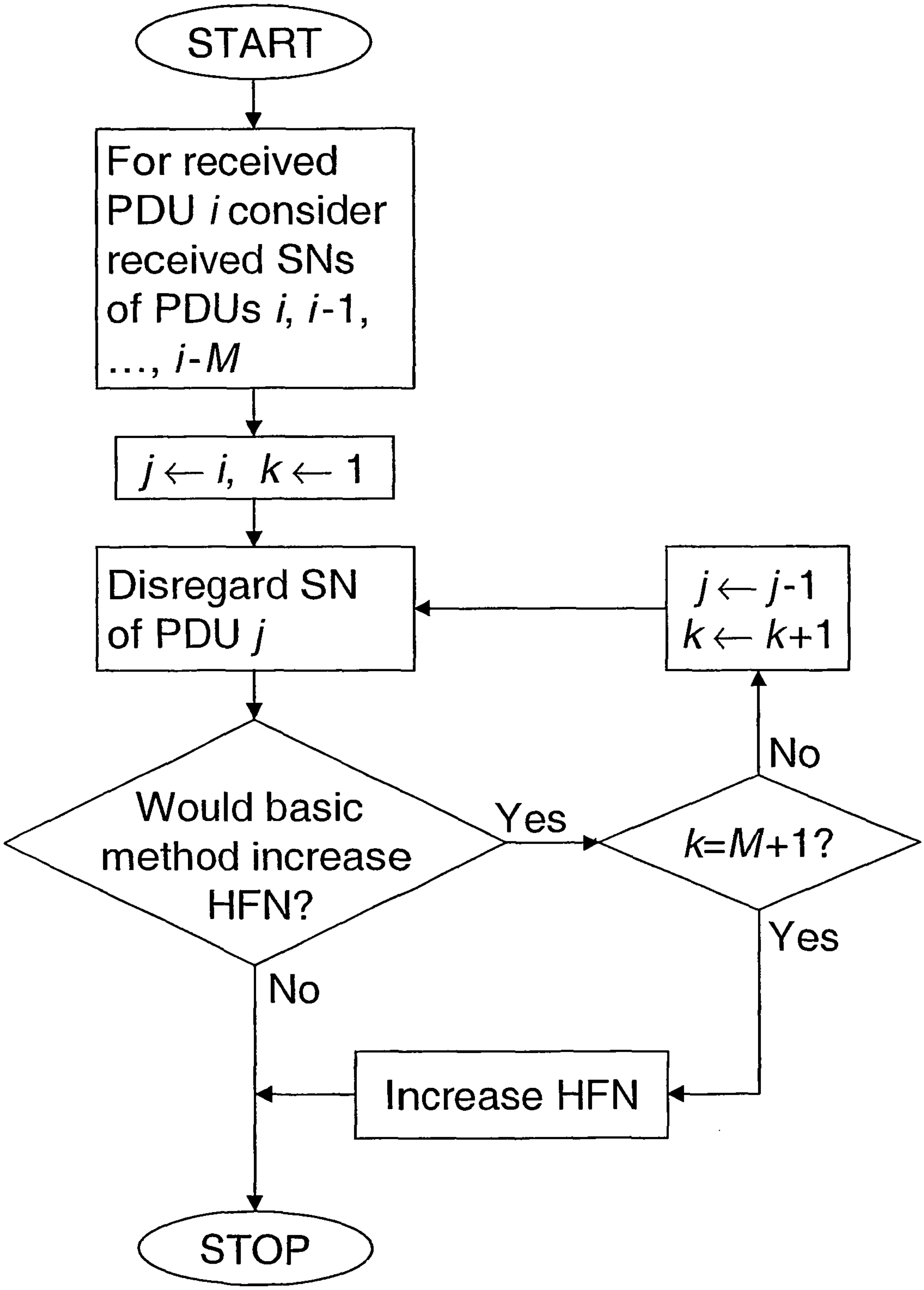
START
For received PDU i consider received SNs of PDUs i, i-1, …, i-M
j ← i, k ← 1
Disregard SN of PDU j
j ← j-1
k ← k+1
Would basic method increase HFN?
Yes
No
k=M+1?
No
Yes
Increase HFN
STOP

*Fig. 7*

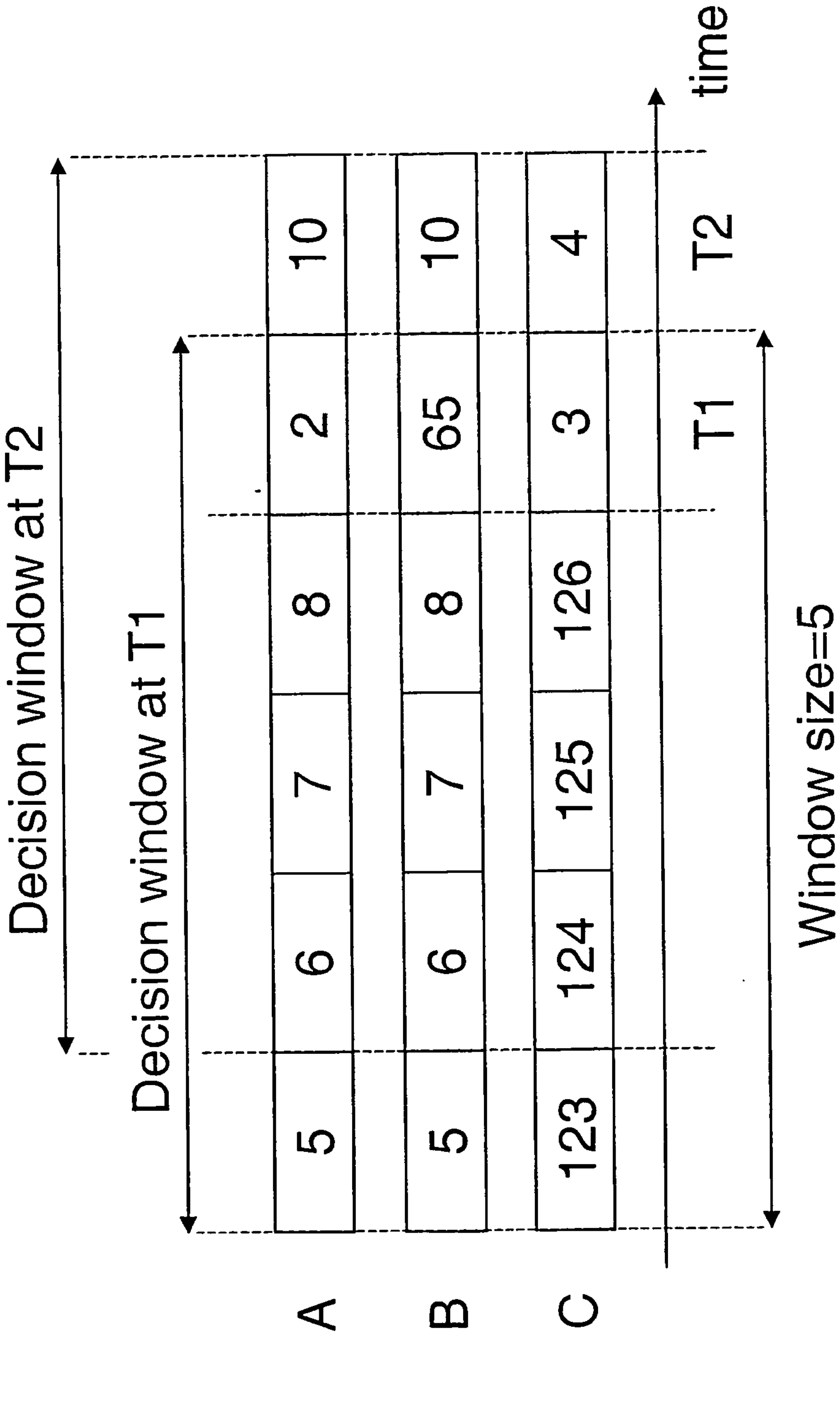
Decision window at T2
Decision window at T1
A
5
6
7
8
2
10
B
5
6
7
8
65
10
C
123
124
125
126
3
4
T1
T2
time
Window size=5

*Fig. 8*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0156249 A


### Non-patent literature cited in the description


- *3rd Generation Partnership Project (3GPP): Technical Specification Group Radio Access Network, Radio Interface Protocol Architecture, 3GPP TS 25.301 v3.6.0,* September 2000
- *3rd Generation Partnership Project (3GPP) : Technical Specification Group Radio Access Network, Multiplexing and channel coding (FDD), 3GPP TS 25.212 v4.4.0,* March 2002
- *3rd Generation Partnership Project (3GPP): Technical Specification Group Radio Access Network, Radio Link Control (RLC) protocol specification, 3GPP TS 25.322 v4.4.0,* March 2002
- *3rd Generation Partnership Project (3GPP): Technical Specification Group services and System Aspects, 3G Security, Security Architecture, 3GPP TS 33.102 v4.3.0,* December 2001
- **SA DA COSTA C et al.** Sequence number synchronization in the ATM adaption layer. *PROCEEDINGS OF THE MEDITERRANEAN ELECTROTECHNICAL CONFERENCE,* 22 May 1991, vol. 1, 505-508